# EUROPEAN PATENT APPLICATION

(11) **EP 4 459 821 A1**
(43) Date of publication of application: **06.11.2024**
(21) Application number: 23171539.2
(22) Date of filing: 04.05.2023
(51) Int. Cl.: H02J 3/14, B60L 53/63, B60L 53/67, H02J 3/32, H02J 7/00

(54) **AN AGGREGATOR SERVER FOR BALANCING A POWER GRID**

(71) Applicant: TOYOTA JIDOSHA KABUSHIKI KAISHA, Toyota-shi, Aichi-ken, 471 8571 (JP)
(72) Inventor: ENDO, Takahito, 1140 BRUSSELS (BE); DE BACKER, Johan, 1140 BRUSSELS (BE)
(74) Representative: Cabinet Beau de Loménie

(57) **Abstract**

An aggregator server for balancing a power grid, the aggregator server being configured to:
- store information that a first mobile battery (43) will be connected to the power grid at a given time (T5);
- receive a replacement request from a first communication device (45) corresponding to the first mobile battery (43);
- provide the first communication device (45) with at least one replacement candidate;
- receive a confirmation that a second mobile battery (44) of the at least one replacement candidate will be connected to the power grid at the given time (T5), instead of the first mobile battery (43).

## Description

### BACKGROUND OF THE INVENTION

### 1. Field of the invention

The present disclosure relates to the field of energy management, and more particularly to an aggregator server for balancing a power grid, a communication device for managing a mobile battery, and a computer-implemented balancing method for a power grid.

### 2. Description of Related Art

There is a growing momentum to reduce greenhouse gas emissions, especially CO₂ emissions, in order to reduce the harmful effects these emissions have on global warming. In this perspective, the electric power sector is shifting from generating electricity using fossil fuels to renewable energy. However, due to the large fluctuations in the amount of electricity supplied from wind and solar power, and the increase in electricity demand and fluctuations due to electrification, including partly or fully electric vehicles, the importance of adjusting the supply-demand balance is increasing.

US 2021/107373 describes a power feed system, in which a power feed controller controls a plurality of vehicles including a first vehicle and a second vehicle to successively carry out external power feed in a relayed manner. When external power feed in the relayed manner by the first vehicle and the second vehicle does not proceed as scheduled, the power feed controller may control a third vehicle to carry out external power feed. Therefore, a satisfactory power feed can be maintained. However, it implies that a third vehicle is available and connected to the power grid, and the power feed controller is responsible for coordinating the power feed over the vehicles in real time, so the load on the power feed controller may be high, especially if many schedule changes occur at the same time.

### SUMMARY

The object of the present invention is to at least substantially remedy the above-mentioned drawbacks.

In this respect, the present disclosure relates to an aggregator server for balancing a power grid, the aggregator server being configured to:
- store information that a first mobile battery will be connected to the power grid at a given time;
- receive a replacement request from a first communication device corresponding to the first mobile battery;
- provide the first communication device with at least one replacement candidate;
- receive a confirmation that a second mobile battery of the at least one replacement candidate will be connected to the power grid at the given time, instead of the first mobile battery.

A mobile battery is a battery which can be selectively connected to and disconnected from a power grid and moved from one place to another. The mobile battery may be integrated in a moving medium such as a vehicle. In other examples, the mobile battery may be a portable battery.

Balancing a power grid means finding a balance between the electricity supply and the electricity demand on this power grid. This balance may rely on one or more mobile batteries connected to the power grid, the mobile battery either discharging to supply power to the grid or charging to get power from the grid. Therefore, one or more mobile batteries connected to the power grid, with appropriate control, are sometimes called a virtual power plant.

The aggregator server may comprise a storage unit for storing information, a communication unit for communicating with other entities such as the first communication device, and/or a processor to process the data which are stored and/or communicated, e.g. to determine the at least one replacement candidate.

The first communication device is a device configured to communicate with the aggregator server, and enabling a user to handle use of the first mobile battery. The first communication device may comprise at least one interface such as a display, a keyboard, a touch screen and the like.

A replacement request is a request for the first mobile battery to be replaced, so that another mobile battery will be connected to the power grid at the given time on behalf of the first mobile battery.

Thanks to the proposed aggregator server, even if the first mobile battery cannot connect to the grid at the given time due to schedule changes, a replacement request can be made to other mobile batteries, so that direct replacement can be provided. This avoids complex prediction changes and computational loads at the aggregator server which manages the balance of the power grid. In addition, flexibility for the mobile battery users is improved.

Optionally, the aggregator server is further configured to receive a replacement offer from the first communication device directed to one of the at least one replacement candidates, and to forward the replacement offer to a second communication device corresponding to said one of the at least one replacement candidates.

That is, one of the replacement candidates is selected at the first communication device's end, a replacement offer directed to that replacement candidate is generated by the first communication device and sent to the aggregator server, and the replacement offer is forwarded to that replacement candidate. Thus, the second communication device is the communication device which, eventually, corresponds to the second mobile battery that is to replace the first mobile battery in connecting to the power grid at the given time.

The aggregator server may thus centralize and dispatch the replacement offers, which is advantageous in particular when the communication devices corresponding to the respective mobile batteries cannot directly communicate with one another.

When forwarding the replacement offer, the aggregator server may pre-process the replacement offer before sending it to the second communication device: the aggregator server does not have to forward the replacement offer as-is. For instance, the aggregator server may ensure anonymity of the first communication device and the second communication device with respect to each other.

Optionally, the confirmation comprises an acceptance of the replacement offer by the second communication device. The confirmation may be sent to the aggregator server directly by the second communication device which accepts the replacement offer. Alternately or in addition, the second communication device may send an acceptance of the replacement offer directly to the first communication device, and the first communication device may send the confirmation to the aggregator server.

Optionally, the aggregator server is further configured to grant a reward to the first mobile battery for being connected to the power grid at the given time, and to at least partially transfer the reward to the second mobile battery if the confirmation has been received.

Granting a reward to a mobile battery means granting a reward (e.g. a financial reward, points to exchange for discounts or products, etc.) to a user or owner of the mobile battery. The reward may be executed later than reception of the confirmation, e.g. when the charging/discharging by the second mobile battery has been completed. This reward transfer prompts replacement candidates to accept the replacement offer.

Optionally, the aggregator server is further configured to impose a penalty to the first mobile battery if the first mobile battery is not connected to the power grid at the given time, and to reduce the penalty if the confirmation has been received.

Imposing a penalty to a mobile battery means imposing a penalty (e.g. a financial penalty, withdrawal of points to exchange for discounts or products, etc.) to a user or owner of the mobile battery. The penalty or reduced penalty may be executed later than the given time, e.g. when the charging/discharging by the second mobile battery has been completed. This penalty reduction prompts users or owners to arrange for their replacement in case of schedule changes, which in turn reduces the load for complex calculations on the aggregator server.

Optionally, the at least one replacement candidate is selected among mobile batteries which are not scheduled to be connected to the power grid at the given time. The aggregator server may scan the stored information, and/or exchange information with the respective communication devices of the replacement candidates, to determine the at least one replacement candidate. Thanks to this selection, the aggregator server avoids suggesting candidates which are already relied upon at the given time. As a consequence, the replacement of the first mobile battery by the second mobile battery does not trigger a need to replace, in turn, the second mobile battery. The replacement selection is therefore smoother and the power grid balance can be managed more easily.

Optionally, the at least one replacement candidate is selected based on respective schedules of mobile batteries other than the first mobile battery. The schedules of the mobile batteries may be known partially or totally to the aggregator server. For instance, the aggregator server may store information indicating that a mobile battery is mounted on a vehicle, and that the vehicle will be driving at the given time; such a mobile battery shall, in these embodiments, not be included in the at least one replacement candidate, because it cannot be connected to the power grid at the given time. Thanks to these provisions, the aggregator server may select, as the at least one replacement candidates, mobile batteries whose schedule is not incompatible with accepting the replacement offer. As a consequence, selection of one of the replacement candidates by the first communication device is facilitated, and the replacement selection is overall smoother.

Optionally, the at least one replacement candidate is selected based on respective scheduled locations, at the given time, of mobile batteries other than the first mobile battery. The aggregator server may store information about said locations, and/or predict said location based on the information stored or otherwise available.

Optionally, the information comprises a first connection location at which the first mobile battery is scheduled to be connected at the given time, and the at least one replacement candidate is selected among mobile batteries which, given their location, are estimated as able, by the given time, to reach a second connection location which is within a same balancing range as the first connection location.

The location of the mobile batteries may be a current location (obtained e.g. by communication between respective communication devices and the aggregator server), a predicted location (obtained e.g. based on past, present or future data about the mobile battery location) or a scheduled location (e.g. stored by the aggregator server).

The ability of a mobile battery to reach the second connection location by the given time may be determined by the aggregator server or by each mobile battery itself, possibly upon a request from the aggregator server.

The balancing range is a part of the power grid for which the aggregator server is configured to maintain a balance between power supply and demand. For instance, the balancing range may be the whole power grid. In another example, the power grid may comprise a plurality of balancing ranges (e.g. sub-grids), each balancing range having its own balance between power supply and demand.

Thanks to these provisions, if the second mobile battery connects to the power grid at the second connection location which is within the same balancing range as the first connection location, the second mobile battery can form a more appropriate replacement to the first mobile battery, without power transfers between different balancing ranges. Accordingly, balancing of the power grid is made easier.

The present disclosure further relates to a communication device for managing a first mobile battery, the communication device being configured to:
- send a replacement request to an aggregator server, for arranging replacement of the first mobile battery being connected to a power grid at a given time;
- receive at least one replacement candidate from the aggregator server;
- send a replacement offer directed to one or more of the at least one replacement candidate;
- send or receive a confirmation that a second mobile battery of the one or more replacement candidate will be connected to the power grid at the given time, instead of the first mobile battery.

The communication device may serve as any one of the previously mentioned communication devices, e.g. the first communication device and/or the second communication device. The communication device may be an in-vehicle device (e.g. a vehicle navigation device) or a portable device carried by a user or owner of the mobile battery, e.g. a smartphone.

In the "send or receive" step, the confirmation may be sent from the replacement candidate either to the aggregator server first and then from the aggregator server to the communication device, in which case the communication device *receives* the confirmation from the aggregator server, or to the communication device first and then from the communication device to the aggregator server, in which case the communication device *sends* the confirmation to the aggregator server.

Likewise, the replacement offer may be either sent to the aggregator server, for the aggregator server to forward it to the replacement candidate, or sent directly to the replacement candidate.

The present disclosure further relates to a computer-implemented balancing method for a power grid, comprising:
- storing information that a first mobile battery will be connected to the power grid at a given time;
- receiving a replacement request from a first communication device corresponding to the first mobile battery;
- providing the first communication device with at least one replacement candidate;
- receiving a confirmation that a second mobile battery of the at least one replacement candidate will be connected to the power grid at the given time, instead of the first mobile battery.

The balancing method may be implemented by the above-described aggregator server, and may have further features corresponding to any one of the features described above in relation to the aggregator server.

The present disclosure further relates to a computer program including instructions for executing the steps of the above described balancing method when said program is executed by a computer. This program can use any programming language and take the form of source code, object code or a code intermediate between source code and object code, such as a partially compiled form, or any other desirable form.

The present disclosure further relates to a recording medium readable by a computer and having recorded thereon a computer program including instructions for executing the steps of the above described balancing method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a schematic chart illustrating supply-demand balance in a power grid.
- Fig. 2 is a diagram of a power grid according to an embodiment.
- Fig. 3 is a time chart illustrating replacement management in an embodiment.

### DETAILED DESCRIPTION OF EMBODIMENTS

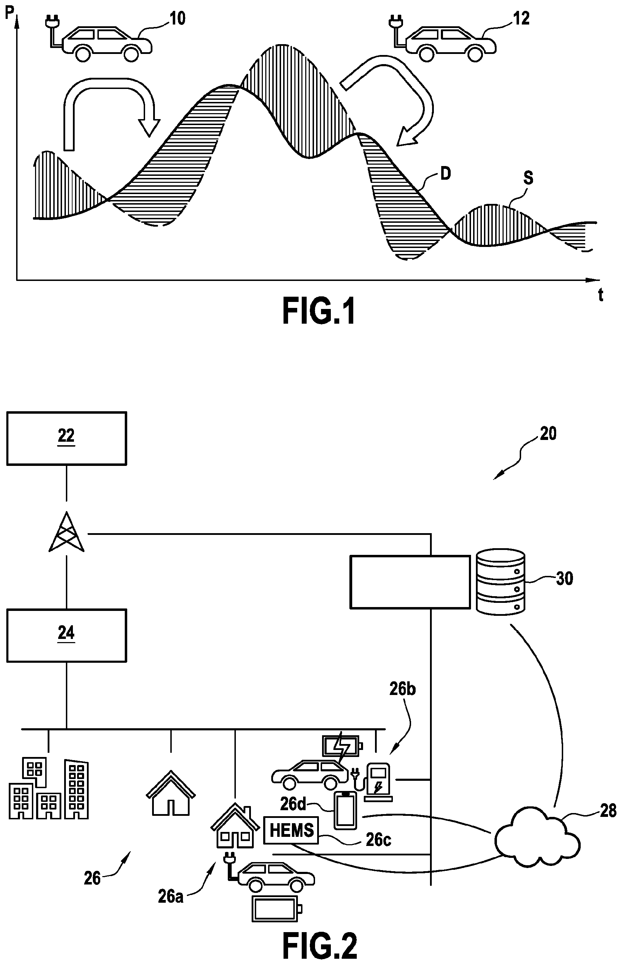

Figure 1 is a chart showing the evolution of supply S and demand D of power P over time t in a power grid. As the supply S and demand D may not exactly match each other, mobile batteries, such as batteries integrated in moving media (e.g. vehicles, such as electric vehicle, plug-in hybrid vehicles, etc.), may be used to make up for the difference between the supply S and the demand D. For instance, when the supply S is greater than the demand D, power may be transferred from the power grid to a vehicle 10 connected to the power grid, thus resulting in charging of the mobile battery integrated therein. Conversely, when the supply S becomes less than the demand D, power may be transferred from the vehicle 10 to the power grid, thus resulting in discharging of the mobile battery of the vehicle 10. For instance, the vehicle 10 may be connected to a bidirectional charging/supplying connection location to the power grid.

This power control may be repeated later as the case may be, for instance with another vehicle 12 integrating another mobile battery. In this way, the mobile batteries work as buffers to make up for the gap between power supply and demand.

Figure 2 illustrates an example of a power grid 20 that is to be balanced. A producer 22 produces electricity and transfers it to at least one distributor 24. In turn, the distributor distributes the electricity among a plurality of loads 26, as required. The loads may include any type of electricity consumer, e.g. houses, buildings, industries, charging stations for vehicles or more generally for mobile batteries, etc.

In particular, in this embodiment, the loads 26 comprise a domestic terminal 26a for a user to charge his vehicle at home, and a public terminal 26b for users to charge their vehicles on demand. The domestic terminal 26a may be managed by a communication device 26c which may be stationary. For instance, the communication device 26c which manages the domestic terminal 26a may be a home electricity management system (HEMS). The public terminal 26b may be managed by a communication device 26d which may be portable. For instance, the communication device 26d which manages the public terminal 26b may be a smartphone.

An aggregator server 30 is provided in order to balance the power grid 10. As will be described in more detail, the aggregator server 30 is configured to store information that a first mobile battery will be connected to the power grid 20 at a given time; to receive a replacement request from a first communication device corresponding to the first mobile battery; to provide the first communication device with at least one replacement candidate; and to receive a confirmation that a second mobile battery of the at least one replacement candidate will be connected to the power grid at the given time, instead of the first mobile battery.

The aggregator server 30 may communicate with the communication devices 26c, 26d through a network 28, e.g. the Internet or a local area network, by means known per se in the art (e.g. wireless connection, etc.). The aggregator server 30 may have the architecture of a computer.

Based on the users' initial schedules and the supply-demand balance predictions, the aggregator server 30 may calculate a charging and supplying schedule for each of the mobile batteries. However, should a user change his schedule, the calculated supply-demand balance of the power grid 20 may be broken.

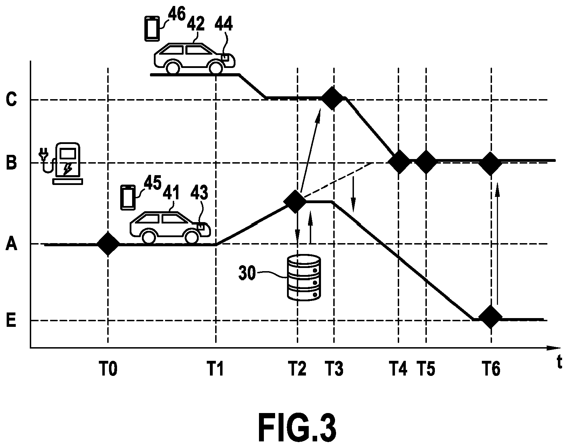

The way the aggregator server 30 helps balancing the power grid 20 in spite of schedule changes is described with more detail with reference to Fig. 3. In Fig. 3, the horizontal axis shows time, including successive times TO to T6, and the vertical axis shows different locations A, B, C and E.

At time T0, the aggregator server 30 stores information that a first mobile battery 43 of a first vehicle 41 will be connected to the power grid 20 at a given time, here between T5 and T6. The aggregator server 30 may further store information that the first mobile battery 43 will be connected, at that time, at a first connection location B. In this example, the first connection location B is a public terminal similar to the public terminal 26b described above. However, other connection locations are envisaged.

The first mobile battery 43 is managed by a first communication device 45. Although illustrated as a smartphone, the first communication device 45 may be an in-vehicle device or any other communication device. As will be detailed later, the first communication device 45 is configured to send a replacement request to the aggregator server 30, for arranging replacement of the first mobile battery being connected to a power grid at a given time; to receive at least one replacement candidate from the aggregator server 30; to send a replacement offer directed to one or more of the at least one replacement candidate; and to send or receive a confirmation that a second mobile battery of the one or more replacement candidate will be connected to the power grid 20 at the given time, instead of the first mobile battery 43.

At time T0, the first vehicle 41 is at location A. At time T1, the first vehicle heads towards location B in order to meet its schedule requirements, i.e. in order to arrive at location B before the time T5 at which it must be connected to the public terminal there.

However, at time T2, a user of the first vehicle 41 decides to change his schedule and to go to location E. In doing so, the first mobile battery 43 cannot be connected to the power grid at the given time, namely between times T5 and T6.

When determining that the first mobile battery 43 will not meet its schedule requirements, the first communication device 45 sends a replacement request to the aggregator server 30, in order to find another mobile battery which could be connected to the power grid 20 at the given time instead (on behalf) of the first mobile battery 43. The aggregator server 30 thus receives the replacement request from the first communication device 45 corresponding to the first mobile battery 43.

Upon receipt of the replacement request, the aggregator server 30 provides the first communication device 45 with at least one replacement candidate. A replacement candidate comprises information about a mobile battery and a communication device corresponding to that mobile battery.

The replacement candidates may be selected in various perspectives, which can be considered individually or combined. In a first perspective, the replacement candidates are selected among mobile batteries which are not scheduled to be connected to the power grid at the given time. That is, the aggregator server 30 is configured to check whether a mobile battery is free or not at the given time, and retain that mobile battery as a replacement candidate only if it is free. Conversely, if the aggregator server 30 stores information that a mobile battery will be connected to the power grid and used for charging/supplying at a time overlapping the given time (e.g. any time between T5 and T6), the aggregator server 30 may not retain that mobile battery as a replacement candidate.

In a second perspective, the replacement candidates are selected based on respective schedules of mobile batteries other than the first mobile battery. For instance, if a mobile battery is to be used at a time overlapping the given time, e.g. because it is integrated in a vehicle that drives at a time overlapping the given time, the aggregator server 30 may consider that this mobile battery is not available for replacing the first mobile battery 43.

In a third perspective, the replacement candidates are selected among mobile batteries which, given their location, are estimated as able, by the given time, to reach a second connection location which is within a same balancing range as the first connection location. In this example, the aggregator server 30 is configured to check whether a mobile battery, given its location and the remaining time to T5, will be able to reach a second connection location which is within a same balancing range as the first connection location B. In particular, the second connection location may be the same location as the first connection location B.

More generally, the selection of the replacement candidates may be carried out on the basis of data about the mobile batteries, e.g. scheduler apps connected to the corresponding communication devices.

Based on the above perspectives, in the present embodiment, the aggregator server determines that a second mobile battery 44 is a suitable replacement candidate. The second mobile battery is integrated in a second vehicle 42 and is managed by a second communication device 46. The second communication device 46 may have part or all of the features of the first communication device 45.

As shown in Fig. 3, at time T2, the second vehicle 42 is at location C. Before time T2, the second vehicle may have followed any possible route based on its user's instructions.

In this embodiment, the first communication device 45 receives one replacement candidate, namely the second mobile battery 44, from the aggregator server 30. However, at this point, the second mobile battery 44 is just a replacement candidate, and the aggregator server 30 still needs to receive a confirmation that the second mobile battery 44 will be connected to the power grid 20 at the given time, instead of the first mobile battery 43. An example for issuing such confirmation is set out below.

Upon receipt of the replacement candidates, a user of the first communication device 45 may send a replacement offer directed to one or more of these replacement candidates. Optionally, the user of the first communication device 45 may select to which candidates, among all the received replacement candidates, the offer is sent.

In this case, as there is only one replacement candidate, the user of the first communication device 45 directs a replacement offer to that replacement candidate. The replacement offer can be sent directly from the first communication device 45 to the second communication device 46, or be sent from the communication device 45 to the aggregator server 30, in which case the aggregator server 30 receives that replacement offer from the first communication device 45 and forwards the replacement offer to the second communication device 46.

At time T3, the second communication device 46 receives the replacement offer and accepts that offer, such that an agreement is reached between the user of the first mobile battery 43 and the user of the second mobile battery 44. The second communication device 46 may then confirm acceptance of the replacement offer to the first communication device 45 and/or to the aggregator server 30, noting that any one of the first communication device 45 and the aggregator server 30 may forward the confirmation to the other one, if desired.

Thus, the aggregator server 30 receives a confirmation that the second mobile battery 44 will be connected to the power grid at the given time, instead of the first mobile battery 43. This confirmation may comprise a key code which is shared by the first communication device 45 and the second communication device 46, so that the aggregator server 30 understands that the second mobile battery 44 is a proxy for the first mobile battery 43.

Thus, the second vehicle 42 drives from the location C to the second connection location, which, in this case, happens to coincide with the first connection location B. Meanwhile, the first vehicle 41 is free to head towards a desired location other than the first connection location B, e.g. location E.

At time T4, the second vehicle 42 arrives at the first connection location B, and the second mobile battery 44 connects to the power grid 20. Therefore, the second mobile battery 44 is ready to perform charging or supplying, as the case may be, during times T5 and T6.

In order to dissuade users to change their schedules when they were supposed to connect a mobile battery to the power grid 20, the aggregator server 30 may be configured to impose a penalty to the first mobile battery 43 if the first mobile battery 43 is not connected to the power grid 20 at the given time. However, in order to prompt users to find a suitable replacement when they must change their schedule, the aggregator server 30 may be further configured to reduce the penalty if the aggregator server 30 has received the confirmation that the second mobile battery 44 will be connected to the power grid 20 at the given time, instead of the first mobile battery 43.The penalty may be calculated upon receipt of the confirmation, and may be executed after the given time has elapsed (e.g. after time T6 in the example of Fig. 3). The reduced penalty may be reduced by a desired factor or amount, and reducing the penalty may comprise canceling the penalty.

Besides, in order to persuade users to share their schedules and to take part in the virtual power plant system, the aggregator server 30 may be configured to grant a reward to the first mobile battery 43 for being connected to the power grid 20 at the given time. However, in order to take account of possible schedule changes, the aggregator server 30 may be configured to at least partially transfer the reward of the first mobile battery 43 to the second mobile battery 44 if the confirmation has been received that the second mobile battery 44 will be connected to the power grid 20 at the given time, instead of the first mobile battery 43. Thus, in order to be able to adapt to possible schedule changes, the aggregator server 30 may wait for the given time to execute the reward. For instance, the arrow after time T6 in Fig. 3 illustrates a reward transfer from the first mobile battery 43 to the second mobile battery 44.

Rewards and penalty may be expressed in any relevant unit, e.g. money, points, in particular points which can be used for paying charges of the mobile battery, loyalty points, discounts or overcharges, etc.

In addition to the reward granted by the aggregator server, the user of the first mobile battery 43 may grant an additional reward to the second mobile battery 44. The information of that additional reward may be included in the replacement offer.

The foregoing description applies mutatis mutandis to a computer-implemented balancing method for a power grid, comprising storing information that a first mobile battery will be connected to the power grid at a given time; receiving a replacement request from a first communication device corresponding to the first mobile battery; providing the first communication device with at least one replacement candidate; and receiving a confirmation that a second mobile battery of the at least one replacement candidate will be connected to the power grid at the given time, instead of the first mobile battery. This method may be executed by a computer program including instructions therefor, when said program is executed by a computer. This program may be recorded on a recording medium.

Although the present disclosure refers to specific exemplary embodiments, modifications may be provided to these examples without departing from the general scope of the invention as defined by the claims.

For instance, in the above example, the second connection location coincides with the first connection location B. However, this needs not be the case. The second connection location may be within the same balancing range as the first connection location, or yet within another balancing range of the same power grid 20.

Besides, in the above example, the aggregator server 30 provides at least one replacement candidate to the first communication device 45, and the first communication device 45 should then seek acceptance of one of these replacement candidates. However, as a variant, the aggregator server 30 may first send a replacement request to other mobile batteries, and select as replacement candidates only the mobile batteries which accepted the replacement request. Then, when the first communication device 45 sends a replacement offer directed to one or more of the replacement candidates, this replacement offer may be accepted automatically, considering that the replacement candidates already accepted the aggregator server's replacement request. In such embodiments, the burden on the user of the first mobile batter 43 may be lightened, however, this may increase the burden on users of other mobile batteries, which are contacted more often.

Besides, in the above example, the aggregator server 30 only identified the second mobile battery 44 as a replacement candidate. However, in other cases, there may be several replacement candidates. In such case, the first communication device 45 may enable to send the replacement offer (or even different replacement offers) to part or all of these replacement candidates.

In other embodiments, however, the aggregator server 30 may not leave any choice to the first communication device 45, and provide only one replacement candidate, for instance the replacement candidate, the mobile battery of which has the closest characteristics to the first mobile battery 43, or the replacement candidate which is the most likely to accept the replacement offer. The single replacement candidate might have preliminary accepted a replacement request, as mentioned above, or not.

More generally, individual characteristics of the different illustrated/mentioned embodiments may be combined in additional embodiments. Therefore, the description and the drawings should be considered in an illustrative rather than in a restrictive sense.

## Claims

1. An aggregator server (30) for balancing a power grid (20), the aggregator server (30) being configured to:
- store information that a first mobile battery (43) will be connected to the power grid (20) at a given time (T5);
- receive a replacement request from a first communication device (45) corresponding to the first mobile battery (43);
- provide the first communication device (45) with at least one replacement candidate;
- receive a confirmation that a second mobile battery (44) of the at least one replacement candidate will be connected to the power grid (20) at the given time (T5), instead of the first mobile battery (43).

2. The aggregator server of claim 1, further configured to receive a replacement offer from the first communication device (45) directed to one of the at least one replacement candidates, and to forward the replacement offer to a second communication device (46) corresponding to said one of the at least one replacement candidates.

3. The aggregator server of claim 2, wherein the confirmation comprises an acceptance of the replacement offer by the second communication device (46).

4. The aggregator server of any one of claims 1 to 3, further configured to grant a reward to the first mobile battery (43) for being connected to the power grid (20) at the given time (T5), and to at least partially transfer the reward to the second mobile battery (44) if the confirmation has been received.

5. The aggregator server of any one of claims 1 to 4, further configured to impose a penalty to the first mobile battery (43) if the first mobile battery (43) is not connected to the power grid (20) at the given time (T5), and to reduce the penalty if the confirmation has been received.

6. The aggregator server of any one of claims 1 to 5, wherein the at least one replacement candidate is selected among mobile batteries which are not scheduled to be connected to the power grid (20) at the given time (T5).

7. The aggregator server of any one of claims 1 to 6, wherein the at least one replacement candidate is selected based on respective schedules of mobile batteries other than the first mobile battery (43).

8. The aggregator server of any one of claims 1 to 7, wherein the at least one replacement candidate is selected based on respective scheduled locations, at the given time, of mobile batteries other than the first mobile battery (43).

9. The aggregator server of any one of claims 1 to 8, wherein the information comprises a first connection location (B) at which the first mobile battery (43) is scheduled to be connected at the given time (20), and the at least one replacement candidate is selected among mobile batteries which, given their location, are estimated as able, by the given time (T5), to reach a second connection location (B) which is within a same balancing range as the first connection location (B).

10. A communication device (45) for managing a first mobile battery, the communication device being configured to:
- send a replacement request to an aggregator server (30), for arranging replacement of the first mobile battery (43) being connected to a power grid (20) at a given time (T5);
- receive at least one replacement candidate from the aggregator server (30);
- send a replacement offer directed to one or more of the at least one replacement candidate;
- send or receive a confirmation that a second mobile battery (44) of the one or more replacement candidate will be connected to the power grid (20) at the given time (T5), instead of the first mobile battery (43).

11. A computer-implemented balancing method for a power grid (20), comprising:
- storing information that a first mobile battery (43) will be connected to the power grid (20) at a given time (T5);
- receiving a replacement request from a first communication device (45) corresponding to the first mobile battery (43);
- providing the first communication device (45) with at least one replacement candidate;
- receiving a confirmation that a second mobile battery (44) of the at least one replacement candidate will be connected to the power grid (20) at the given time (T5), instead of the first mobile battery (43).

12. A computer program including instructions for executing the steps of the method of claim 11 when said program is executed by a computer.

13. A recording medium readable by a computer and having recorded thereon a computer program including instructions for executing the steps of the method of claim 11.
